# EUROPÄISCHE PATENTSCHRIFT

(11) **EP 1 734 269 B1**
(45) Veröffentlichungstag und Bekanntmachung des Hinweises auf die Patenterteilung: **24.11.2010**
(21) Anmeldenummer: 05105221.5
(22) Anmeldetag: 14.06.2005
(51) Int. Cl.: F16C 33/66, F16H 57/04

(54) **Lager mit Öltrichter**
Bearing with an oil funnel
Roulement avec une trémie d'huile

(43) Veröffentlichungstag der Anmeldung: 20.12.2006
(73) Patentinhaber: Getrag Ford Transmissions GmbH, 50725 Köln (DE)
(72) Erfinder: Bernhardt, Udo, 50259, Pulheim (DE); Paumen, Thomas, 40231, Düsseldorf (DE)

(56) Entgegenhaltungen:
- EP-A- 0 984 207
- US-A- 5 154 517

## Beschreibung

Die Die Erfindung betrifft ein Lager zum Lagern einer Hohlwelle.

Derartige Lager in unterschiedlichsten Ausführungen sind allseits bekannt. Dabei sitzt üblicherweise das Lager auf dem Außenumfang der drehbaren Hohlwelle und stützt diese in axialer und/oder radialer Richtung ab.

Eine durch das Lager abzustützende Hohlwelle kann beispielsweise in einem Schaltgetriebe eines Kraftfahrzeuges zum Einsatz kommen. Dort kann die Hohlwelle wenigstens ein Losrad tragen, das nicht drehfest mit ihr verbunden ist. Die notwendige Drehlagerung zwischen Losrad und Hohlwelle übernimmt üblicherweise ein Gleitlager, ein Wälzlager ist aber ebenso denkbar. Das für das Gleitlager notwendige Öl wird dabei durch einen Innenraum der Hohlachse zugeführt.

Um eine ausreichende Zuführung des Öls sicherzustellen, ist bekannt, an einem axialen Ende der Hohlwelle einen Öltrichter vorzusehen, durch den das Öl in den Innenraum der Hohlwelle geleitet wird.

Bei heutigen Schaltgetrieben müssen für diese Beölungstrichter in den Getriebegehäusen Konturen vorgesehen sein, die die Beölungstrichter radial zentrieren. Eine axiale Zentrierung erfolgt in der Regel durch eines der Lager für die Hohlwelle und das benachbarte Getriebegehäuse. Diese Konstruktion erfordert axialen Bauraum mit definierten Freiheiten zur Hohlwelle, um einen Kontakt der Hohlwelle mit dem Beölungstrichter zu vermeiden. Des weiteren ist bei der Montage von Hohlwelle, Lager und Öltrichter darauf zu achten, dass der Öltrichter bei dem Einsetzen der Hohlwelle in die Lagerstelle nicht beschädigt wird, was die Montage aufwendig macht. Der Beölungstrichter ist drehfest mit dem Getriebegehäuse verbunden.

Aus der US 5,154,517 ist ein Wälzlager für eine Hohlwelle bekannt, wobei ein Öltrichter an einem ersten Endring eines Lagerkäfigs des Wälzlagers angeformt ist, der zur Aufnahme von Wälzkörpern dient. Der Öltrichter weist einen Trichtereingang und einen Trichterausgang auf. Der Trichterausgang ist als koaxiale Rohr ausgebildet und erstreckt sich von der Ebene des ersten Endringes in Richtung eines zweiten Endringes, der von dem ersten Endring axiale beabstandet ist. An der Innenseite des Trichterausgangs bzw. des Rohres sind Pumpenschaufeln vorgesehen, die bei Drehung des Öltrichters Öl in das Innere der Hohlwelle pumpen. Dies gewährleistet eine gewisse ölzufuhr in die Hohlwelle, welche jedoch je nach Anforderung einer Verbesserung bedarf.

Der Erfindung liegt daher die Aufgabe zugrunde, ein Lager für eine Hohlwelle bereitzustellen, das unter besonderer Berücksichtigung eines für die Hohlwelle notwendigen Öltrichters eine einfachere Montage der Hohlwelle ermöglicht, vorzugsweise auch dazu geeignet ist, die axiale Baulänge des Schaltgetriebes zu reduzieren, und eine gute Ölzufuhr in die Hohlwelle gewährleisten.

Die der Erfindung zugrunde liegende Aufgabe wird durch ein Lager mit den Merkmalen des Anspruchs 1 gelöst. Bevorzugte Ausführungsformen können den Unteransprüche entnommen werden.

Erfindungsgemnäß umfasst das Lager einen Öltrichter mit einem Trichtereingang und mit einem Trichterausgang, wobei in Gebrauchslage des Lagers der Trichterausgang in die Hohlwelle hineinragt. Lager und Öltrichter bilden somit ein Bauteil, was die Montage der Hohlwelle vereinfacht. Zudem ist eine gesonderte radiale Zentrierung des Öltrichters durch eine dafür vorgesehene Kontur in dem Getriebegehäuse nicht mehr notwendig, da die radiale Zentrierung des Öltrichters durch den Sitz des Lagers auf der Hohlwelle erfolgt. Auch kann durch die Erfindung die axiale Baulange des Schaltgetriebes grundsätzlich reduziert wenden.

Das Lager ist als Wälzlager mit einem Lagerkäfig zur Aufnahme von Wälzkörpern ausgebindet Das Wätzlager kann ein Kugellager oder ein Rollenlager sein. Der Öltrichter ist dabei drehfest mit dem Lagerkäfig verbunden. Durch die drehfeste Verbindung dreht sich der Öltrichter mit dem Lagerkäfig. Der Öltrichter dreht sich mit einer Drehgeschwindigkeit, die der halben Drehgeschwindigkeit der zu lagernden Hohlwelle entspricht, wenn die Wälzkörper auf der Hohlwelle abrollen.

Diese Drehung kann in geeigneter Weise dazu genutzt werden, die Ölzufuhr des Öltrichters in die Hohlwelle sicherzustellen bzw. zu erhöhen. Auf einer Innenseite des Öltrichters sind Mittel vorgesehen, durch die bei Drehung des Öltrichters Öl von dem Trichtereingang in Richtung des Trichterausgangs, sprich in Richtung des Innenraums der Hohlwelle, transportiert wird.

Diese Mittel umfassen mehrere Pumpenschaufeln, die vorzugsweise spiralförmig vom Trichtereingang in Richtung des Trichterausgangs laufen. Dreht sich nun der Öltrichter, schaufeln die Pumpenschaufeln das Öl vom Trichtereingang in Richtung Trichterausgang und sorgen somit für einen gesicherten Öltransport in die Hohlwelle hinein. Die Pumpenschaufeln erstrecken sich vom ersten Endring bis zum Trichterausgang. Die Pumpenschaufeln, sind in Umfangsrichtung des vorzugsweise rotationssymmetrischen Trichters zueinander beabstandet angeordnet. Neben der Anzahl der Pumpenschaufeln kann durch die Dimensionierung der Schaufeln (zum Beispiel Länge, Form, Schaufelfläche) bestimmt werden, in welchem Maße Öl in die Hohlwelle transportiert werden soll.

Der Lagerkäfig des Wälzlagers weist einen ersten Endring und einen dazu in axialer Richtung beabstandeten zweiten Endring auf, wobei der Öltrichter mit dem ersten Endring verbunden ist. Sitzt in Gebrauchslage das Lager auf dem Außenumfang an einem axialen Ende der Hohlwelle, so erstreckt sich der Öltrichter von dem ersten Endring, der dem axialen Ende der Hohlwelle zugewandt ist, in den Innenraum der Hohlwelle, ohne dass es dabei zu einer Berührung zwischen dem Öltrichter und der Hohlwelle kommt.

In einem bevorzugten Ausführungsbeispiel sind Pumpenschaufeln und der Öltrichter einstückig ausgebildet. Beispielsweise können Öltrichter und Pumpenschaufeln somit in einfacher Weise als ein Gussstück hergestellt werden.

Vorzugsweise sind zumindest der erste Endring und der Öltrichter einstückig ausgebildet. Zweckmäßig sind auch der zweite Endring und eine Anzahl von Querstegen, durch die die beiden voneinander beabstandeten Endringe verbunden sein können, ebenfalls einstückig mit dem Öltrichter ausgebildet. Somit können Lagerkäfig und Öltrichter beispielsweise durch Gießen in einfacher Weise als ein Stück hergestellt werden.

Lagerkäfig und Öltrichter können aus Kunststoff sein und vorzugsweise in einer Kunststoffspritzgussform herstellbar sein.

Der erste Endring kann einen äußeren Rand des Trichtereingangs des Öltrichters bilden. Somit schließt sich der Öltrichter unmittelbar dem ersten Endring an.

In einem bevorzugten Ausführungsbeispiel erstreckt sich der Öltrichter mit dem Trichterausgang in axialer Richtung von dem ersten Endring gesehen über den zweiten Endring hinaus. Somit weist der Öltrichter eine axiale Breite auf, die größer ist als die axiale Breite des Lagerkäfigs. Bei dieser Ausführung ragt der Öltrichter weit in den Innenraum der Hohlwelle hinein und kann dadurch für eine besonders sichere Zufuhr von Öl sorgen.

Anhand eines in den Figuren dargestellten Ausführungsbeispies wird die Erfindung näher erläutert. Es zeigen:
- Figur: 1 ein erfindungsgemäßes Lager mit Öltrichter;
- Figur 2: das Lager der Figur 1 ohne einen äußeren Lagerring;
- Figur 3: das Lager der Figur 2 ohne Wälzkörper; und
- Figur 4: das Lager der Figur 3 in einer anderen perspektivischen Ansicht.

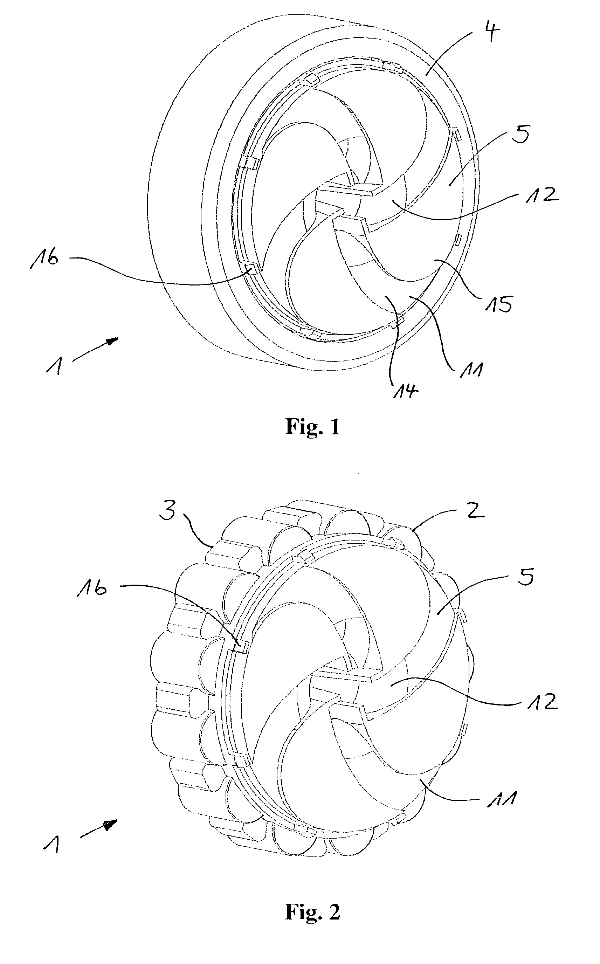

Die Figuren 1 bis 4 zeigen ein Lager, das in seiner Gesamtheit mit 1 bezeichnet wird. Das Lager ist als Wälzlager ausgebildet, das mehrere Walzkörper 2 und einen Lagerkäfig 3 umfasst, der zur Aufnahme der Wälzkörper 2 dient (vgl. Figur 2). Des weiteren umfasst das Lager 1 einen äußeren Lagerring 4 und einen Öltrichter 5, wobei der äußere Lagerring 4 nur in der Figur 1 dargestellt ist und in radialer Richtung gesehen von außen an den Wälzkörper 2 anliegt. Die Widerhaken 16 verhindern ein Abrutschen des Lagerkäfigs 3 von dem äußeren Lagerring 4.

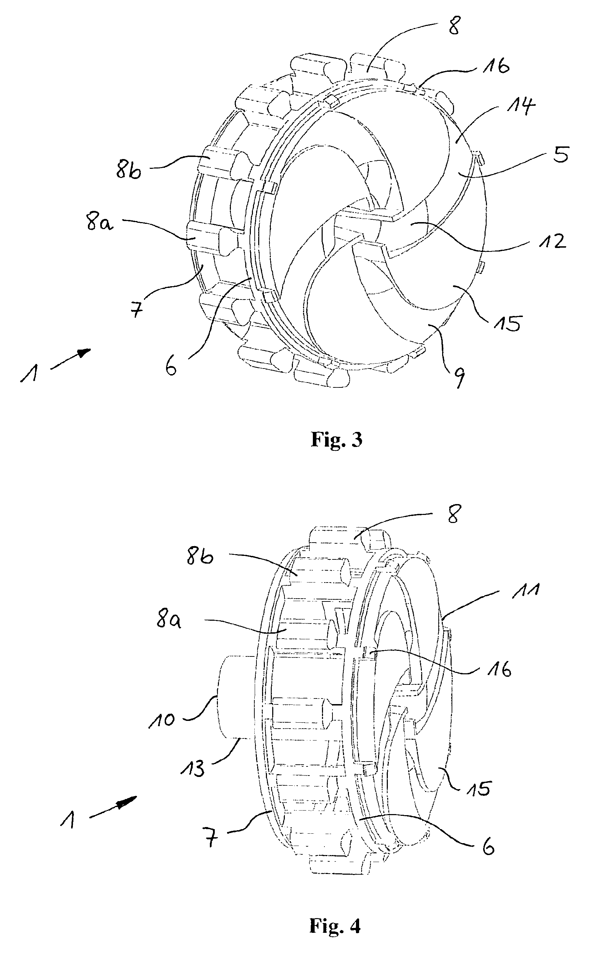

Wie insbesondere den Figuren 3 und 4 zu entnehmen ist, umfasst der Lagerkäfig 3 einen ersten Endring 8 und einen zweiten Endring 7, die in axialer Richtung des Lagers 1 voneinander beabstandet sind. Zwischen dem ersten Endring 6 und dem zweiten Endring 7 sind eine Vielzahl von Querstegen 8 angeordnet, die die beiden Endringe 6, 7 miteinander verbinden. In Umfangsrichtung gesehen weisen benachbarte Querstege 8a, 8b jeweils einen gleichen Abstand auf. Zwei benachbarte Querstege 8a, 8b nehmen dabei einen Wälzkörper 2 auf und stellen eine radiale Führung für Letztgenannten dar. Die axiale Führung der Wälzkörper 2 erfolgt durch die beiden Endringe 6, 7.

An dem ersten Endring 6 ist der Öltrichter 5 angeformt, wobei der erste Endring 6 einen äußeren Rand eines Trichtereingangs 9 des Öltrichters 5 bildet. Der Öltrichter 5 weist eine rotationssymmetrische Grundform auf, wobei ein Trichterausgang 10 koaxial zu dem Lagerkäfig 3 angeordnet sst.

Der Öltrichter 5 umfasst drei Bereiche. Ein erster Bereich 11 ist im Wesentlichen scheibenförmig ausgebildet und liegt in der Ebene des ersten Endringes 6. Der erste Bereich 11 bildet dabei den Trichtereingang 9. An diesen ersten Bereich 11 schließt sich ein zweiter Bereich 12 an, der im Wesentlichen die Form eines Trichters mit sich verjüngendem Strömungsquerschnitt aufweist. Dem zweien Bereich 12 schließt sich ein dritter Bereich 13 an, der rohrförmig mit in etwa konstantem Durchmesser ausgebildet ist. Wie insbesondere Figur 4 zu entnehmen ist, erstreckt sich dabei der dritte Bereich 13 des Öltrichters 5 in etwa von der Ebene des ersten Endrings 6 über die Ebene des zweiten Endrings 7 hinaus und definiert den Trichterausgang 10.

Auf einer Innenfläche 14 des Öltrichters 5 sind mehrere Pumpenschaufeln 15 angeformt, die sich von dem ersten Endring 6 bis zum zweiten Bereich 12 des Öltrichters 5 und weiter bis zum Trichterausgang 10 erstrecken. In dem in den Figuren gezeigten Ausführungsbeispiel sind vier Pumpenschaufeln 15 vorgesehen, die jeweils zueinander in Umfangsrichtung gesehen einen gleichen Abstand aufweisen.

Dreht sich im Betrieb eine Hohlwelle, die an einem axialen Ende von dem Lager 1 getragen wird, rollen die zylinderförmigen Wälzkörper 2 auf der Hohlwelle und auf dem feststehenden äußeren Lagerring ab. Dieses Abrollen führt zu einer Drehgeschwindigkeit des Lagerkäfigs 3 und damit auch des Öltrichters 5, die halb so groß ist wie die Drehgeschwindigkeit der Hohlwelle.

Durch die Drehung des Öltrichters 5 und damit der auf der Innenseite 14 angeordneten Pumpenschaufeln 15 wird Öl, das sich vor oder in unmittelbarer Nähe des Öltrichters 5 befindet, in Richtung des Trichterausgangs 10 befördert. Somit wird Öl in das Innere der Hohlwelle geschaufelt oder gepumpt, von wo es aus, wie oben bereits beschrieben, beispielsweise einem Gleitlager zwischen der Hohlwelle und einem von der Hohlwelle getragenden Losrad zugeführt werden kann.

### Bezugszeichenliste

- 1: Lager
- 2: Wälzkörper
- 3: Lagerkäfig
- 4: äußerer Lagerring
- 5: Öltrichter
- 6: erster Endring
- 7: zweiter Endring
- 8: Quersteg
- 9: Trichtereingang
- 10: Trichterausgang
- 11: erster Bereich
- 12: zweiter Bereich
- 13: dritter Bereich
- 14: Innenfläche
- 15: Pumpenschaufel
- 16: Widerhaken

## Patentansprüche

1. Lager (1) zum Lagern einer Hohlwelle, mit einem Lagerkäfig (3), der einen ersten Endring (6) und einen dazu axial beabstandeten zweiten Endring (7) aufweist und zur Aufnahme von Wälzkörpern (2) dient, mit einem drehfest mit dem ersten Endring (6) verbundenen Öltrichter (5), der einen Trichtereingang (9) und einen Trichterausgang (10) aufweist, wobei auf einer Innenseite (14) des Öltrichters (5) mehrere Pumpenschaufeln (15) vorgesehen sind, durch die bei Drehung des Öltrichters (5) Öl von dem Trichtereingang (9) in Richtung des Trichterausgangs (10) transportiert werden, und wobei sich, wenn in Gebrauchslage das Lager (1) auf einen Außenumfang an einem axialen Ende der Hohlwelle sitzt, der Öltrichter (5) von dem ersten Endring (6), der dem axialen Ende der Hohlwelle zugewandt ist, in einen Hohlraum der Hohlwelle erstreckt, ohne dass es dabei zu einer Berührung zwischen dem Öltrichter (5) und der Hohlwelle kommt, **dadurch gekennzeichnet, dass** sich die Pumpenschaufeln (15) von dem ersten Endring (6) bis zu einem Bereich des Öltrichters (5), der im Wesentlichen die Form eines Trichters mit sich verjüngendem Strömungsquerschnitt aufweist, und weiter bis zum Trichterausgang (10) erstrecken.

2. Lager (1) nach Anspruch 1, **dadurch gekennzeichnet, dass** die Pumpenschaufeln (15) und der Öltrichter (5) einstückig ausgebildet sind.

3. Lager (1) nach Anspruch 1 oder 2, **dadurch gekennzeichnet, dass** zumindest der erste Endring (8) und der Öltrichter (5) einstückig ausgebildet sind.

4. Lager (1) nach einem der Ansprüche 2 bis 3, **dadurch gekennzeichnet, dass** der Lagerkäfig (3) und der Öltrichter (5) aus Kunststoff sind und vorzugsweise in einer Kunststoffspritzgussform herstellbar sind.

5. Lager (1) nach einem der Ansprüche 1 bis 4, **dadurch gekennzeichnet, dass** der erste Endring (6) einen äußeren Rand des Trichtereingangs (9) des Öltrichters (5) bildet.

6. Lager (1) nach einem der Ansprüche 1 bis 5, **dadurch gekennzeichnet, dass** sich der Öltrichter (5) mit dem Trichterausgang (10) in axialer Richtung von dem ersten Endring (6) aus gesehen über die Ebene hinaus erstreckt, in der der zweite Endring (7) liegt.

7. Lager (1) nach einem der Ansprüche 1 bis 6, **dadurch gekennzeichnet, dass** Widerhaken (16) vorgesehen sind, die ein Abrutschen eines äußeren Lagerrings (4) vom Lagerkäfig (3) verhindern.

## Claims

1. Bearing (1) for mounting a hollow shaft, having a bearing cage (3) which has a first end ring (6) and, spaced apart axially therefrom, a second end ring (7) and which serves to hold rolling bodies (2), having an oil funnel (5) which is rotationally fixedly connected to the first end ring (6) and which has a funnel inlet (9) and a funnel outlet (10), with a plurality of pump blades (15) being provided on an inner side (14) of the oil funnel (5), by means of which pump blades (15) oil is transported from the funnel inlet (9) in the direction of the funnel outlet (10) when the oil funnel (5) rotates, and with the oil funnel (5) extending, when the bearing (1) is seated on an outer circumference on an axial end of the hollow shaft in a use position, from the first end ring (6), which faces toward the axial end of the hollow shaft, into a cavity of the hollow shaft without contact being made between the oil funnel (5) and the hollow shaft, **characterized in that** the pump blades (15) extend from the first end ring (6) to a region of the oil funnel (5) which has substantially the shape of a funnel with tapering flow cross section, and onward to the funnel outlet (10).

2. Bearing (1) according to Claim 1, **characterized in that** the pump blades (15) and the oil funnel (5) are formed in one piece.

3. Bearing (1) according to Claim 1 or 2, **characterized in that** at least the first end ring (6) and the oil funnel (5) are formed in one piece.

4. Bearing (1) according to one of Claims 2 to 3, **characterized in that** the bearing cage (3) and the oil funnel (5) are formed from plastic and can preferably be manufactured in a plastics injection mould.

5. Bearing (1) according to one of Claims 1 to 4, **characterized in that** the first end ring (6) forms an outer edge of the funnel inlet (9) of the oil funnel (5).

6. Bearing (1) according to one of Claims 1 to 5, **characterized in that** the oil funnel (5) extends with the funnel outlet (10) in the axial direction, as viewed from the first end ring (6), beyond the plane in which the second end ring (7) lies.

7. Bearing (1) according to one of Claims 1 to 6, **characterized in that** barbed hooks (16) are provided which prevent an outer bearing ring (4) from slipping off the bearing cage (3).

## Revendications

1. Palier (1) pour supporter un arbre creux, comprenant une cage de palier (3), qui présente une première bague d'extrémité (6) et une deuxième bague d'extrémité (7) espacée axialement de celle-ci, et qui sert à recevoir des corps de roulement (2), une trémie d'huile (5) connectée de manière solidaire en rotation à la première bague d'extrémité (6), qui présente une entrée de trémie (9) et une sortie de trémie (10), plusieurs pales de pompe (15) étant prévues sur un côté intérieur (14) de la trémie d'huile (5), lesquelles assurent le transport d'huile depuis l'entrée de trémie (9) dans la direction de la sortie de trémie (10) lors de la rotation de la trémie d'huile (5), et, lorsque dans la position d'utilisation, le palier (1) repose sur une périphérie extérieure contre une extrémité axiale de l'arbre creux, la trémie d'huile (5) s'étendant depuis la première bague d'extrémité (6), qui est tournée vers l'extrémité axiale de l'arbre creux, dans une cavité de l'arbre creux, sans qu'il ne se produise en l'occurrence de contact entre la trémie d'huile (5) et l'arbre creux, **caractérisé en ce que** les pales de pompe (15) s'étendent depuis la première bague d'extrémité (6) jusqu'à une région de la trémie d'huile (5) qui présente essentiellement la forme d'une trémie avec une section transversale d'écoulement se rétrécissant, et de là jusqu'à la sortie de trémie (10).

2. Palier (1) selon la revendication 1, **caractérisé en ce que** les pales de pompe (15) et la trémie d'huile (5) sont réalisées d'une seule pièce.

3. Palier (1) selon la revendication 1 ou 2, **caractérisé en ce qu'**au moins la première bague d'extrémité (6) et la trémie d'huile (5) sont réalisées d'une seule pièce.

4. Palier (1) selon l'une quelconque des revendications 2 à 3, **caractérisé en ce que** la cage de palier (3) et la trémie d'huile (5) sont en plastique et peuvent être fabriquées de préférence dans un moule de moulage par injection de plastique.

5. Palier (1) selon l'une quelconque des revendications 1 à 4, **caractérisé en ce que** la première bague d'extrémité (6) forme un bord extérieur de l'entrée de trémie (9) de la trémie d'huile (5).

6. Palier (1) selon l'une quelconque des revendications 1 à 5, **caractérisé en ce que** la trémie d'huile (5) s'étend avec la sortie de trémie (10), vue dans la direction axiale depuis la première bague d'extrémité (6) au-delà du plan dans lequel se trouve la deuxième bague d'extrémité (7).

7. Palier (1) selon l'une quelconque des revendications 1 à 6, **caractérisé en ce que** des barbes (16) sont prévues, lesquelles empêchent un glissement d'une bague de palier extérieure (4) hors de la cage de palier (3).
